# EUROPÄISCHE PATENTSCHRIFT

(11) **EP 3 300 141 B1**
(45) Veröffentlichungstag und Bekanntmachung des Hinweises auf die Patenterteilung: **17.03.2021**
(21) Anmeldenummer: 17191269.4
(22) Anmeldetag: 15.09.2017
(51) Int. Cl.: H01M 2/16, H01M 4/04, H01M 4/70, H01M 10/0525, H01M 10/0585, H01M 10/04, B23K 26/08, B23K 26/38

(54) **VERFAHREN ZUR HERSTELLUNG EINES ELEKTRODENSTAPELS FÜR EINE BATTERIEZELLE UND BATTERIEZELLE**
METHOD FOR THE PREPARATION OF AN ELECTRODE STACK FOR A BATTERY CELL AND BATTERY CELL
PROCÉDÉ DE FABRICATION D'UN EMPILEMENT D' ÉLECTRODES POUR UNE BATTERIE ET BATTERIE

(30) Priorität: 27.09.2016 DE 102016218494
(43) Veröffentlichungstag der Anmeldung: 28.03.2018
(73) Patentinhaber: Robert Bosch GmbH, 70442 Stuttgart (DE)
(72) Erfinder: Juestel, Thomas, 96114 Hirschaid-Juliushof (DE); Kretschmar, Thomas, 96199 Zapfendorf (DE); Proell, Johannes, 96052 Bamberg (DE); Sauerteig, Daniel, 96052 Bamberg (DE)

(56) Entgegenhaltungen:
- EP-A1- 2 830 125
- WO-A1-2017/055057
- WO-A2-2011/026087
- DE-A1-102016 203 918
- KR-A- 20160 050 718
- US-A1- 2008 305 398

## Beschreibung

Die Erfindung betrifft ein Verfahren zur Herstellung eines Elektrodenstapels für eine Batteriezelle durch Stapeln von Segmenten. Die Erfindung betrifft auch eine Batteriezelle, die einen Elektrodenstapel aufweist, der nach dem erfindungsgemäßen Verfahren hergestellt ist.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Die Elektroden der Batteriezelle sind folienartig ausgebildet und unter Zwischenlage eines Separators, welcher die Anode von der Kathode trennt, beispielsweise zu einem Elektrodenstapel gestapelt. Die Elektroden können auch zu einem Elektrodenwickel gewunden sein oder auf eine andere Art eine Elektrodeneinheit bilden.

Die beiden Elektroden der Elektrodeneinheit sind elektrisch mit Polen der Batteriezelle verbunden, welche auch als Terminals bezeichnet werden. Die Elektroden und der Separator sind von einem in der Regel flüssigen Elektrolyt umgeben. Die Batteriezelle weist ferner ein Zellengehäuse auf, welches beispielsweise aus Aluminium gefertigt ist. Das Zellengehäuse ist in der Regel prismatisch, insbesondere quaderförmig, ausgestaltet und druckfest ausgebildet. Aber auch andere Gehäuseformen, beispielsweise kreiszylindrisch, oder auch flexible Pouchzellen, sind bekannt.

Wesentliche Bestrebung bei der Entwicklung von neuen Batteriezellen ist, das elektrochemische Nutzvolumen in der Zelle zu erhöhen. Als geeignetste Bauform einer Elektrodeneinheit zur Maximierung des Nutzvolumens hat sich der Elektrodenstapel herausgestellt, da dieser sowohl ideal prismatisch als auch in einer beliebigen anderen Geometrie hergestellt werden kann.

Die Handling der plattenförmigen Elektroden und insbesondere des plattenförmigen Separators sind kompliziert. Dies führt zu einer verhältnismäßig hohen Prozesszeit beim Stapeln der Elektroden und
des Separators zu dem Elektrodenstapel.

WO2011/026087 offenbart doppelseitige Elektroden mit

Metallfolienstromkollektor, auf deren beiden Seiten aktives Anoden- oder Kathodenmaterial aufgebracht ist. Diese Elektroden werden durch einen Gießprozess mit einer Separatorschicht bedeckt. Eine erste, und falls für die gewünschte Kapazität notwendige zweite oder dritte usw. doppelseitige Kathodenanordnung wird auf einer, ersten, zweiten oder dritten usw. doppelseitigen Anodenanordnung gestapelt in einem kontinuierlichen Prozess mit Förderband. In einer Ausführungsform können nachdem die verschiedenen Laminate zusammengebaut sind, die Batteriezellen durch Schneiden entlang Schnittlinien gebildet werden.

Aus der US 4283469 ist eine Batteriezelle mit einer Elektrodeneinheit bekannt. Kathode und Separator der Elektrodeneinheit sind dabei zu einer integralen Struktur zusammengefasst. Das Material, aus welchem der Separator gefertigt ist, ist dabei Aluminiumoxid (Al₂O₃).

In der WO 2013/107911 A1 ist ein Separator für eine Lithium-Ionen- Batterie sowie ein entsprechendes Herstellverfahren offenbart. Das Material, aus welchem der Separator gefertigt ist, umfasst dabei ein Blockcopolymer und Aluminiumoxid oder Aluminiumhydroxid.

Aus der EP 2 830 125 A1 ist ein Separator für eine elektrochemische Zelle und ein Verfahren zu seiner Herstellung bekannt. Der Separator umfasst dabei eine poröse Schicht, welche mindestens ein organisches Bindemittel und mindestens ein funktionalisiertes Aluminiumoxidhydroxid umfasst.

Die US 2010/0183907 A1 offenbart einen Separator für eine Batterie, welcher aus harten Abstandshaltern aus Keramik gebildet ist. Die Abstandshalter sind dabei in eine mikroporöse Membran eingebracht.

Aus der US 6,153,337 sind Separatoren für elektrochemische Zellen bekannt. Die Separatoren umfassen eine mikroporöse Schicht aus Pseudo-Böhmit. Die Schicht weist dabei Poren mit einem mittleren Durchmesser zwischen 1 nm und 300 nm auf.

Die US 6,723,467 B2 offenbart ebenfalls einen Separator für eine Batterie. Der Separator umfasst dabei eine poröse Schicht, welche ein thermoplastisches Material enthält, und eine weitere poröse Schicht, welche eine höhere Hitzebeständigkeit aufweist.

### Offenbarung der Erfindung

Die vorliegende Erfindung ist ein Verfahren zur Herstellung eines Elektrodenstapels für eine Batteriezelle gemäß Anspruch 1, eine Batteriezelle gemäß Anspruch 12 umfassend mindestens einen Elektrodenstapel (10) hergestellt nach einem Verfahren nach einem der Ansprüche 1 bis 11 und die Verwendung einer Batteriezelle nach Anspruch 12 gemäß Anspruch 13 Das Verfahren umfasst dabei mindestens die nachfolgend aufgeführten Schritte.

Zunächst wird ein bandförmiges Anodenelement bereitgestellt, das einen anodischen Stromableiter umfasst, auf welchen ein anodisches Aktivmaterial aufgebracht ist. Ebenfalls wird ein bandförmiges Kathodenelement bereitgestellt, das einen kathodischen Stromableiter umfasst, auf welchen ein kathodisches Aktivmaterial aufgebracht ist. Weiterhin wird ein bandförmiges Separatorelement bereitgestellt.

Das Anodenelement, das Kathodenelement und das Separatorelement sind vorliegend flach und bandförmig ausgebildet. Das bedeutet in diesem Zusammenhang, dass eine Ausdehnung der besagten Elemente in eine Längsrichtung viel größer, insbesondere mindestens zehnmal größer, ist als eine Ausdehnung der besagten Elemente in eine Querrichtung, welche rechtwinklig zu der Längsrichtung orientiert ist.

Danach wird ein bandförmiges Verbundelement durch Aufbringen des Separatorelements auf das Anodenelement erzeugt. Das Separatorelement bedeckt dabei vorzugsweise das anodische Aktivmaterial vollständig. Lediglich der anodische Stromableiter ragt teilweise seitlich über das Separatorelement hinaus.

Das Separatorelement liegt insbesondere in Form eines Schlickers vor und weist eine Dicke von 0,2 µm bis 100 µm, bevorzugt von 0,2 µm bis 30 µm, insbesondere jedoch von 1 µm bis 20 µm auf. Dabei ist jeweils die Dicke nach dem Trocknen gemeint. Die Schichtdicke nach dem Beschichten und vor dem Trocknen ist abhängig vom NMP zu PVDF Verhältnis, also von der Viskosität des Schlickers.

Anschließend erfolgen ein Schneiden des Verbundelements zu plattenförmigen Verbundsegmenten, sowie ein Schneiden des Kathodenelements zu plattenförmigen Kathodensegmenten. Diese Operation wird auch als "Vereinzelung" bezeichnet.

Die Verbundsegmente und die Kathodensegmenten sind vorliegend flach und plattenförmig ausgebildet. Das bedeutet in diesem Zusammenhang, dass eine Ausdehnung der besagten Segmente in Längsrichtung annähernd gleich groß, insbesondere mindestens halb so groß und höchstens doppelt so groß, ist wie eine Ausdehnung der besagten Segmente in Querrichtung.

Dann erfolgt ein Stapeln von zuvor erzeugten Segmenten derart, dass Verbundsegmente und Kathodensegmente alternierend angeordnet sind. Durch das Stapeln einer ausreichenden Anzahl von Segmenten entsteht der Elektrodenstapel für die Batteriezelle.

Gemäß einer vorteilhaften Ausgestaltung der Erfindung wird zunächst das Verbundelement zu Verbundsegmenten geschnitten, und das Kathodenelement wird zunächst zu Kathodensegmenten geschnitten. Anschließend werden die so erzeugten Verbundsegmente und Kathodensegmente alternierend übereinander gestapelt. In dem Elektrodenstapel ist somit, mit Ausnahme der jeweils außen angeordneten Segmente, jedes Verbundsegment von zwei Kathodensegmenten umgeben, und jedes Kathodensegment ist von zwei Verbundsegmenten umgeben.

Gemäß einer weiteren vorteilhaften Ausgestaltung der Erfindung wird zunächst das Kathodenelement auf das Verbundelement aufgebracht. Das Kathodenelement und das Verbundelement werden dann gemeinsam im gleichen Arbeitsgang zu plattenförmigen Stapelsegmenten geschnitten. Die so erzeugten Stapelsegmente umfassen jeweils ein Verbundsegment und ein Kathodensegment. Anschließend werden die so erzeugten Stapelsegmente übereinander gestapelt. Die Stapelsegmente werden dabei derart übereinander gestapelt, dass in dem Elektrodenstapel, mit Ausnahme der jeweils außen angeordneten Segmente, jedes Verbundsegment von zwei Kathodensegmenten umgeben ist, und dass jedes Kathodensegment von zwei Verbundsegmenten umgeben ist.

Vorzugsweise ist das anodische Aktivmaterial beidseitig auf den anodischen Stromableiter aufgebracht. Der anodische Stromableiter ist beispielsweise aus Kupfer gefertigt. Ebenso ist vorzugsweise das kathodische Aktivmaterial beidseitig auf den kathodischen Stromableiter aufgebracht. Der kathodische Stromableiter ist beispielsweise aus Aluminium gefertigt.

Vorteilhaft wird beidseitig auf das Anodenelement je ein Separatorelement aufgebracht. Die Separatorelemente bedecken dabei vorzugsweise das anodische Aktivmaterial beidseitig vollständig. Lediglich der anodische Stromableiter ragt teilweise beidseitig seitlich über die Separatorelemente hinaus. Das Separatorelement besteht beispielsweise aus einem Oxidkeramik-Schlicker oder aus einem Oxidkeramik-Schlicker mit PE-/PP-Separator.

Gemäß einer vorteilhaften Ausgestaltung der Erfindung ist das Separatorelement mit einer Oxidschicht beschichtet. Die Oxidschicht enthält dabei vorzugsweise Aluminiumoxid (Al₂O₃).

Gemäß einer anderen vorteilhaften Ausgestaltung der Erfindung stellt die die Oxidschicht das Separatorelement dar und weist vorzugsweise keinen PolyolefinTräger auf.

Gemäß einer weiteren vorteilhaften Ausgestaltung der Erfindung wird beim Erzeugen des bandförmigen Verbundelements eine Oxidschicht auf das Anodenelement aufgebracht. Der Einsatz eines konventionellen polyolefin-basierten Basisträgers (PE-, PP- oder PE/PP/PE-Folie) entfällt dabei komplett. Die Oxidschicht wird dabei als gießfähiger Schlicker oder Slurry auf das Anodenmaterial aufgebracht und enthält beispielsweise Al₂O₃ oder Böhmit oder eine andere inerte und nicht-leitende Oxidkeramik wie ZrO₂, n-methyl 2-pyrrolidon (NMP), n-Butanol zur Einstellung der Porosität, PVDF oder PVDF-HFP, oder ein anderes polymer, insbesondere Block-Copolymer, zur flexiblen und mechanisch stabilen Gestaltung des polyolefin-freien Separators.

Gemäß einer weiteren vorteilhaften Ausgestaltung der Erfindung wird beim Erzeugen des bandförmigen Verbundelements eine Oxidschicht zwischen das Anodenelement und das Separatorelement eingebracht. Die Oxidschicht enthält dabei vorzugsweise Aluminiumoxid (Al₂O₃).

Dabei wird die Oxidschicht vorzugsweise in feuchtem Zustand auf das Anodenelement aufgebracht.

Das Separatorelement wird vorzugsweise auf das Anodenelement und auf die Oxidschicht aufgebracht, bevor die eingebrachte Oxidschicht getrocknet ist.

Es wird auch eine Batteriezelle vorgeschlagen, die mindestens einen Elektrodenstapel umfasst, der nach dem erfindungsgemäßen Verfahren hergestellt ist.

Eine erfindungsgemäße Batteriezelle findet vorteilhaft Verwendung in einem Elektrofahrzeug (EV), in einem Hybridfahrzeug (HEV), in einem Plug-In-Hybridfahrzeug (PHEV) oder in einem Consumer-Elektronik-Produkt. Unter Consumer-Elektronik-Produkten sind insbesondere Mobiltelefone, Tablet-PCs oder Notebooks zu verstehen.

### Vorteile der Erfindung

Das erfindungsgemäße Verfahren gestattet eine Verringerung der erforderlichen Prozesszeit beim Stapeln der Elektroden und des Separators zu dem Elektrodenstapel. Erfindungsgemäß ist der Separator beim Stapeln fest mit der Anode verbunden. Somit ist kein Stapeln von separaten Separatorfolien, welche verhältnismäßig dünn und flexibel sind, erforderlich. Auch ist kein separates Vereinzeln der Separatorfolien erforderlich, wodurch ein weiterer Arbeitsgang eingespart wird.

Weiterhin entfällt durch das erfindungsgemäße Verfahren die Positionierungstoleranz, welche sich durch separates Stapeln von Anoden und Separatorfolien zu einem Elektrodenstapel ergeben würde. Selbst maschinelles Stapeln solcher Anoden und Separatorfolien ist in der Exaktheit begrenzt, wodurch sich eine Maschinen- und später eine Prozessfähigkeit ergeben. Um den Überlapp zwischen Anode, Separator und Kathode im Sinne der elektrochemischen Funktionalität so gering wie möglich zu halten und eine maximale Volumenausnutzung der Batteriezelle zu erzielen ist es vorteilhaft, den Separator auf die Anode beidseitig aufzubringen, z.B. durch Beschichtung. Durch diese prozessbedingte Fixierung wird ein anschließendes Handling der Anoden-/Separator-Segmente sowie der Kathode im Stapelprozess erleichtert (Prozessrobustheit). Ein weiterer Vorteil der Erfindung ergibt sich durch die Beschichtung des Anodenmaterials mit z.B. AI203. Beim Stapeln der Anoden-/Separator-Segmente mit Kathoden werden diese so zueinander ausgerichtet, dass die Terminals (überstehende AI- und Cu-Fähnchen) zueinander ausgerichtet werden und die Kanten dieser in einer Flucht liegen. Durch mehrfaches Stapeln solcher Segmente mit Kathoden entsteht eine Höhendifferenz zwischen einzelnen Al-Fähnchen und Cu-Fähnchen. Für einen nachfolgenden Kontaktierungsprozess der AI- und der Cu-Fähnchen untereinander wird z.B. ein Schweißprozess eingesetzt. Dafür müssen die Al- oder Cu-Fähnchen um die jeweilige Höhendifferenz zusammengepresst werden. Dabei kann es vorkommen, je nach Exaktheit und Auslegung der Beschichtung des kathodischen und anodischen Aktivmaterials auf den AI- und Cu-Stromableitern, dass Al-Fähnchen anodisches Aktivmaterial und/oder Cu-Folie kontaktieren, was zu beschleunigten Alterungseffekten und/oder einem Zellversagen führen kann. Das oxidische und inerte Separatormaterial dient somit zugleich als Kantenbeschichtung ("edge coating") und Erhöht somit Lebenszeit, Sicherheit und Zuverlässigkeit der Batteriezelle. Ein weiterer Vorteil der Erfindung ist der Wegfall eines polyolefin-basierten (PE, PP) Basisträgers in einer der beschriebenen Ausführungsformen. Dadurch ergeben sich höhere thermische Stabilitäten der Batteriezelle, begleitet von einer verbesserten Sicherheit der Zelle (verringerter Separatorschrumpf bei thermischer Einwirkung, dadurch verringerte Wahrscheinlichkeit des Kontaktes von Anode und Kathode und damit eines Kurzschlusses - begleitet von einem thermischen Durchgehen ("thermal runaway) - im Schadensfall).

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batteriezelle,
- Figur 2: Schritte zur Herstellung eines Elektrodenstapels gemäß einer ersten Ausführungsvariante,
- Figur 3: Schritte zur Herstellung eines Elektrodenstapels gemäß einer zweiten Ausführungsvariante,
- Figur 4: eine schematische Schnittdarstellung eines Stapelsegments und
- Figur 5: eine schematische Darstellung der Einbringung einer Oxidschicht.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

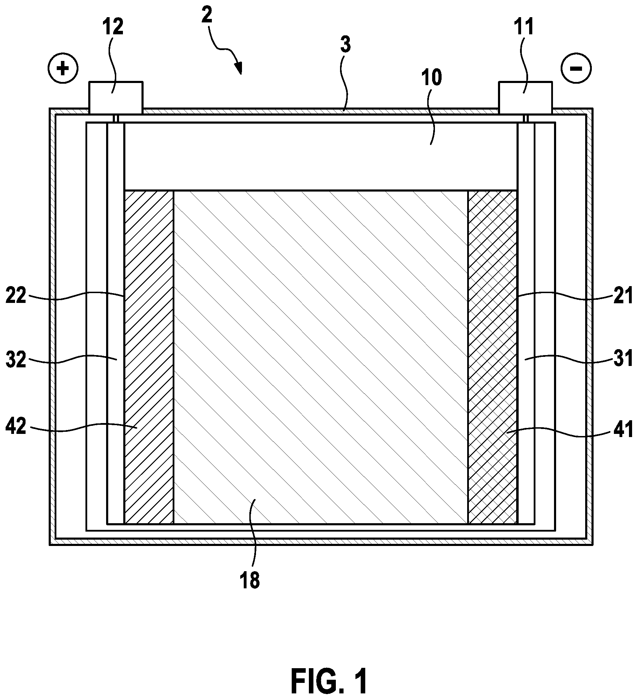

Figur 1 zeigt eine schematische Darstellung einer Batteriezelle 2. Die Batteriezelle 2 umfasst ein Gehäuse 3, welches prismatisch, vorliegend quaderförmig, ausgebildet ist. Das Gehäuse 3 ist vorliegend elektrisch leitend ausgeführt und beispielsweise aus Aluminium gefertigt.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden.

Innerhalb des Gehäuses 3 der Batteriezelle 2 ist eine Elektrodeneinheit angeordnet, welche vorliegend als Elektrodenstapel 10 ausgeführt ist. Der Elektrodenstapel 10 weist zwei Elektroden, nämlich eine Anode 21 und eine Kathode 22, auf. Die Anode 21 und die Kathode 22 sind jeweils folienartig ausgeführt und durch einen Separator 18 voneinander separiert. Der Separator 18 ist ionisch leitfähig, also für Lithiumionen durchlässig.

Die Anode 21 umfasst ein anodisches Aktivmaterial 41 und einen anodischen Stromableiter 31. Der anodische Stromableiter 31 ist elektrisch leitfähig ausgeführt und aus einem Metall gefertigt, beispielsweise aus Kupfer. Der anodische Stromableiter 31 ist elektrisch mit dem negativen Terminal 11 der Batteriezelle 2 verbunden.

Die Kathode 22 umfasst ein kathodisches Aktivmaterial 42 und einen kathodischen Stromableiter 32. Der kathodische Stromableiter 32 ist elektrisch leitfähig ausgeführt und aus einem Metall gefertigt, beispielsweise aus Aluminium. Der kathodische Stromableiter 32 ist elektrisch mit dem positiven Terminal 12 der Batteriezelle 2 verbunden.

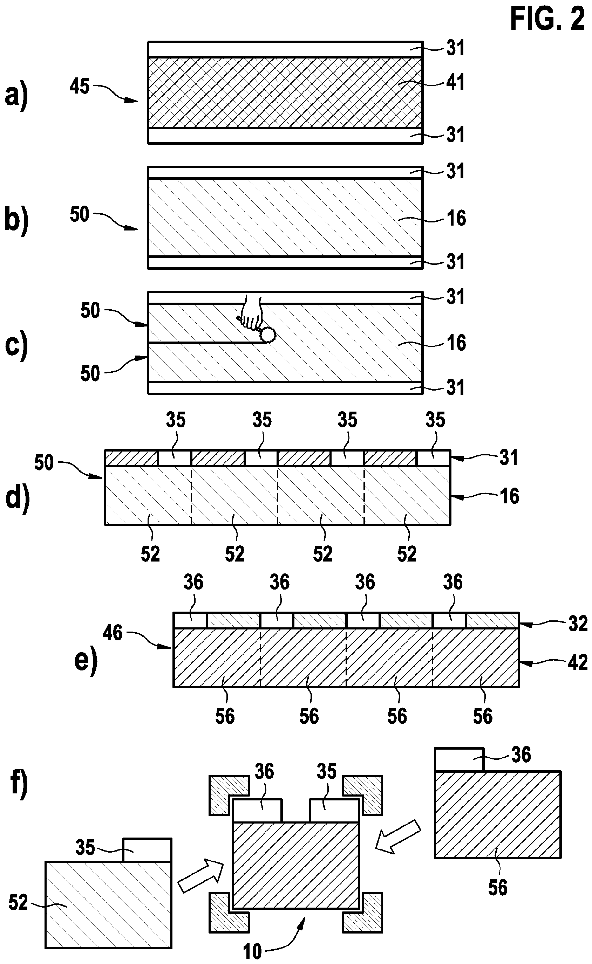

In Figur 2 sind Schritte zur Herstellung eines Elektrodenstapels 10 gemäß einer ersten Ausführungsvariante dargestellt.

Zunächst wird, wie in Teilfigur a) dargestellt, ein bandförmiges Anodenelement 45 bereitgestellt, das einen anodischen Stromableiter 31 umfasst, auf welchen ein anodisches Aktivmaterial 41 aufgebracht ist. Das anodische Aktivmaterial 41 ist beidseitig auf den anodischen Stromableiter 31 aufgebracht.

Anschließend wird, wie in Teilfigur b) dargestellt, ein bandförmiges oder gegossenes Separatorelement 16 derart auf das Anodenelement 45 aufgebracht, dass das anodische Aktivmaterial 41 vollständig verdeckt ist und lediglich der anodische Stromableiter 31 teilweise herausragt. Dabei wird beidseitig auf das Anodenelement 45 je ein Separatorelement 16 aufgebracht. Dadurch wird ein Verbundelement 50 erzeugt.

Das erzeugte Verbundelement 50 wird anschließend, wie in Teilfigur c) dargestellt, in Längsrichtung mittig durchgeschnitten. Dadurch entstehen zwei gleichartige Verbundelemente 50, bei denen der anodische Stromableiter 31 nur auf einer Seite in Querrichtung teilweise unter dem Separatorelement 16 herausragt.

Danach wird, wie in Teilfigur d) dargestellt, der herausragende anodische Stromableiter 31 des Verbundelements 50 derart beschnitten, dass mehrere Kontaktfahnen 35 der Anode 21 entstehen. Ferner wird das Verbundelement 50 mehrfach in Querrichtung derart geschnitten, dass mehrere plattenförmige Verbundsegmente 52 entstehen. Jedes Verbundsegment 52 umfasst zwei Schichten des Separators 18.

Es wird auch ein bandförmiges Kathodenelement 46 bereitgestellt, das einen kathodischen Stromableiter 32 umfasst, auf welchen ein kathodisches Aktivmaterial 42 aufgebracht ist. Das kathodische Aktivmaterial 42 ist beidseitig auf den kathodischen Stromableiter 32 aufgebracht.

Dabei wird, wie in Teilfigur e) dargestellt, der herausragende kathodische Stromableiter 32 des Kathodenelements 46 derart beschnitten, dass mehrere Kontaktfahnen 36 der Kathode 22 entstehen. Ferner wird das Kathodenelement 46 mehrfach in Querrichtung derart geschnitten, dass mehrere plattenförmige Kathodensegmente 56 entstehen.

Anschließend werden, wie in Teilfigur f) dargestellt, Verbundsegmente 52 und Kathodensegmente 56 alternierend zu dem Elektrodenstapel 10 gestapelt. Die Verbundsegmente 52 werden derart angeordnet, dass die Kontaktfahnen 35 der Anode 21 fluchten. Die Kathodensegmente 56 werden derart angeordnet, dass die Kontaktfahnen 36 der Kathode 22 fluchten. Dabei werden die Kontaktfahnen 35 der Anode 21 versetzt zu den Kontaktfahnen 36 der Kathode 22 positioniert.

Nachfolgend werden die Kontaktfahnen 35 der Anode 21 miteinander und mit dem negativen Terminal 11 der Batteriezelle 2 elektrisch verbunden. Ebenso werden nachfolgend die Kontaktfahnen 36 der Kathode 22 miteinander und mit dem positiven Terminal 12 der Batteriezelle 2 elektrisch verbunden.

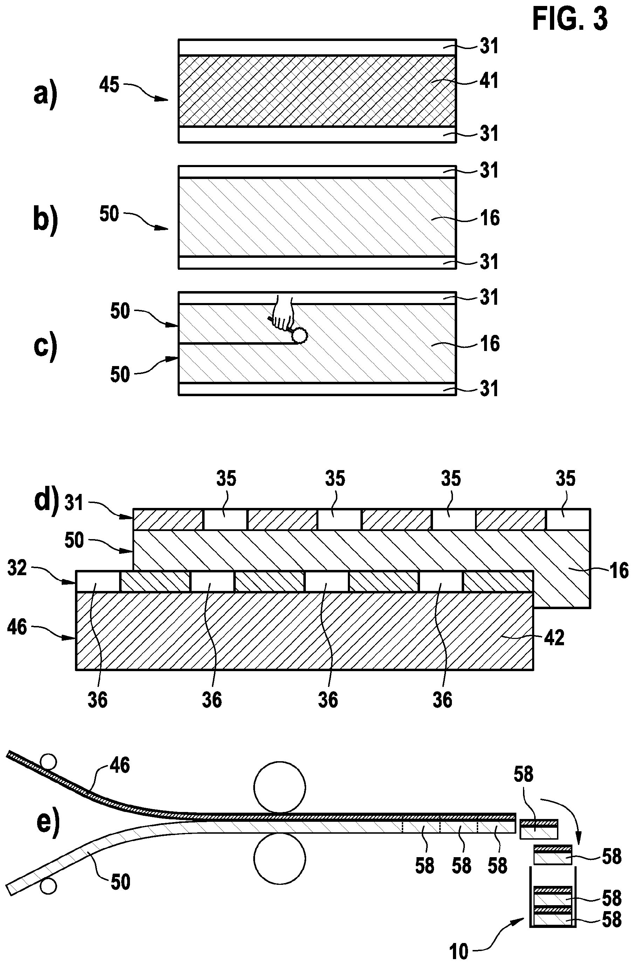

In Figur 3 sind Schritte zur Herstellung eines Elektrodenstapels 10 gemäß einer zweiten Ausführungsvariante dargestellt.

Zunächst wird, wie in Teilfigur a) dargestellt, ein bandförmiges Anodenelement 45 bereitgestellt, das einen anodischen Stromableiter 31 umfasst, auf welchen ein anodisches Aktivmaterial 41 aufgebracht ist. Das anodische Aktivmaterial 41 ist beidseitig auf den anodischen Stromableiter 31 aufgebracht.

Anschließend wird, wie in Teilfigur b) dargestellt, ein bandförmiges Separatorelement 16 derart auf das Anodenelement 45 aufgebracht, dass das anodische Aktivmaterial 41 vollständig verdeckt ist und lediglich der anodische Stromableiter 31 teilweise herausragt. Dabei wird beidseitig auf das Anodenelement 45 je ein Separatorelement 16 aufgebracht. Dadurch wird ein Verbundelement 50 erzeugt.

Das erzeugte Verbundelement 50 wird anschließend, wie in Teilfigur c) dargestellt, in Längsrichtung mittig durchgeschnitten. Dadurch entstehen zwei gleichartige Verbundelemente 50, bei denen der anodische Stromableiter 31 nur auf einer Seite in Querrichtung teilweise unter dem Separatorelement 16 herausragt.

Es wird auch ein bandförmiges Kathodenelement 46 bereitgestellt, das einen kathodischen Stromableiter 32 umfasst, auf welchen ein kathodisches Aktivmaterial 42 aufgebracht ist. Das kathodische Aktivmaterial 42 ist beidseitig auf den kathodischen Stromableiter 32 aufgebracht.

Der herausragende anodische Stromableiter 31 des Verbundelements 50 wird derart beschnitten, dass mehrere Kontaktfahnen 35 der Anode 21 entstehen. Auch wird der herausragende kathodische Stromableiter 32 des Kathodenelements 46 derart beschnitten, dass mehrere Kontaktfahnen 36 der Kathode 22 entstehen.

Anschließend wird, wie in Teilfigur d) dargestellt, das Kathodenelement 46 auf das Verbundelement 50 aufgebracht. Das Kathodenelement 46 und das Verbundelement 50 werden dabei derart ausgerichtet, dass die Kontaktfahnen 35 der Anode 21 versetzt zu den Kontaktfahnen 36 der Kathode 22 positioniert sind.

In Teilfigur e) ist schematisch dargestellt, wie das Kathodenelement 46 auf das Verbundelement 50 aufgebracht, insbesondere laminiert, wird. Ferner werden nach dem Laminieren das Kathodenelement 46 und das Verbundelement 50 gemeinsam zu plattenförmigen Stapelsegmenten 58 geschnitten. Jedes der so erzeugten Stapelsegmente 58 umfasst jeweils ein Verbundsegment 52 und ein Kathodensegment 56, wie zu Figur 2 beschrieben. Jedes Stapelsegment 58 umfasst somit zwei Schichten des Separators 18.

Danach werden die so erzeugten Stapelsegmente 58 zu dem Elektrodenstapel 10 übereinander gestapelt. Die Stapelsegmente 58 werden dabei derart übereinander gestapelt, dass in dem Elektrodenstapel 10, mit Ausnahme der jeweils außen angeordneten Segmente, jedes Verbundsegment 52 von zwei Kathodensegmenten 56 umgeben ist, und dass jedes Kathodensegment 56 von zwei Verbundsegmenten 52 umgeben ist.

Nachfolgend werden die Kontaktfahnen 35 der Anode 21 miteinander und mit dem negativen Terminal 11 der Batteriezelle 2 elektrisch verbunden. Ebenso werden nachfolgend die Kontaktfahnen 36 der Kathode 22 miteinander und mit dem positiven Terminal 12 der Batteriezelle 2 elektrisch verbunden.

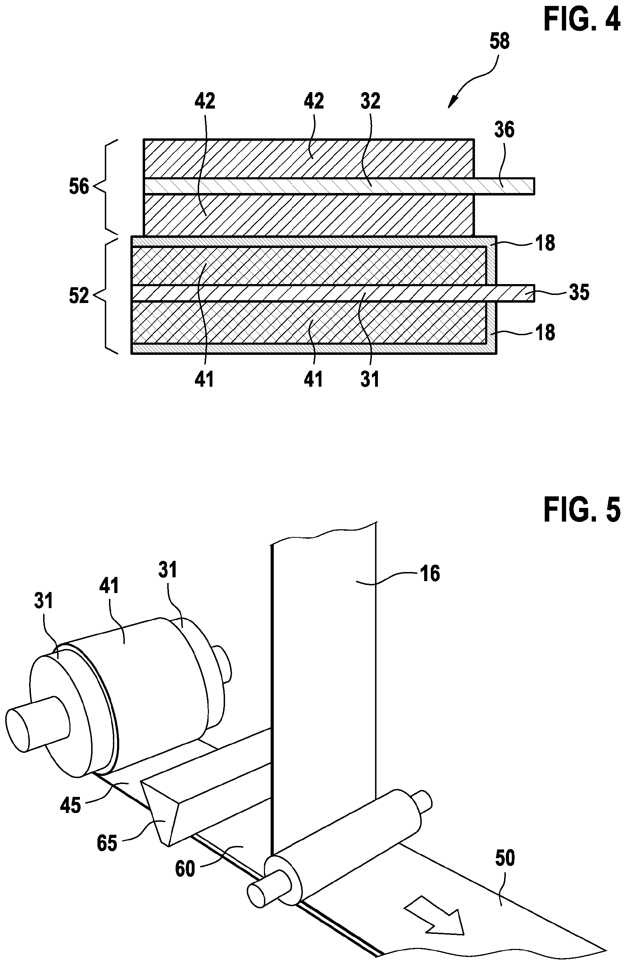

Figur 4 zeigt eine schematische Schnittdarstellung eines Stapelsegments 58. Das Stapelsegment 58 weist ein Verbundsegment 52 und ein Kathodensegment 56 auf.

Das Kathodensegment 56 umfasst einen kathodischen Stromableiter 32, auf welchen beidseitig ein kathodisches Aktivmaterial 42 aufgebracht ist. Ein Teil des kathodischen Stromableiters 32 ragt als Kontaktfahne 36 der Kathode 22 seitlich aus dem Kathodensegment 56 heraus.

Das Verbundsegment 52 umfasst einen anodischen Stromableiter 31, auf welchen beidseitig ein anodisches Aktivmaterial 41 aufgebracht ist. Ein Teil des anodischen Stromableiters 31 ragt als Kontaktfahne 35 der Anode 21 seitlich aus dem Verbundsegment 52 heraus. Ferner ist auf das anodische Aktivmaterial 41 jeweils eine Schicht des Separators 18 aufgebracht.

Figur 5 zeigt eine schematische Darstellung der Einbringung einer Oxidschicht 60 beim Erzeugen des bandförmigen Verbundelements 50. Die Oxidschicht 60 enthält vorliegend Aluminiumoxid (Al₂O₃).

Vorzugsweise mittels eines Rollrakels 65 wird die Oxidschicht 60 in feuchtem Zustand auf das bandförmige Anodenelement 45 aufgebracht. Dem Anodenelement 45 und der Oxidschicht 60 wird das Separatorelement 16 derart zugeführt, dass die Oxidschicht 60 zwischen dem Anodenelement 45 und dem Separatorelement 16 angeordnet ist.

Das Separatorelement 16 wird umgehend nach Aufbringen der Oxidschicht 60 auf das Anodenelement 45 aufgebracht, insbesondere, bevor die eingebrachte Oxidschicht 60 getrocknet ist. Die Oxidschicht 60 bewirkt eine verbesserte Verbindung des Anodenelements 45 mit dem Separatorelement 16.

Vorliegend wird die Oxidschicht 60 zwischen das Anodenelement 45 und den Polyolefinträger eingebracht. Optional kann das Auflegen des Polyolefinträgers komplett entfallen und der oxidkeramische Schlicker kann direkt als haftendes Separatorelement 16 auf das Anodenelement 45 gegossen werden).

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Elektrodenstapels (10) für eine Batteriezelle (2), umfassend folgende Schritte:
- Bereitstellen eines bandförmigen Anodenelements (45), umfassend einen anodischen Stromableiter (31), auf welchen ein anodisches Aktivmaterial (41) aufgebracht ist,
- Bereitstellen eines bandförmigen Kathodenelements (46), umfassend einen kathodischen Stromableiter (32), auf welchen ein kathodisches Aktivmaterial (42) aufgebracht ist,
- Bereitstellen eines bandförmigen Separatorelements (16),
- Erzeugen eines bandförmigen Verbundelements (50) durch Aufbringen des Separatorelements (16) auf das Anodenelement (45),
- Schneiden des Verbundelements (50) zu plattenförmigen Verbundsegmenten (52), sowie Schneiden des Kathodenelements (46) zu plattenförmigen Kathodensegmenten (56),
- Stapeln von Segmenten (52, 56, 58) derart, dass Verbundsegmente (52) und Kathodensegmente (56) alternierend angeordnet sind.

2. Verfahren nach Anspruch 1, wobei
zunächst das Verbundelement (50) zu Verbundsegmenten (52) und das Kathodenelement (46) zu Kathodensegmenten (56) geschnitten werden, und anschließend die Verbundsegmente (52) und die Kathodensegmente (56) alternierend gestapelt werden.

3. Verfahren nach Anspruch 1, wobei
zunächst das Kathodenelement (46) auf das Verbundelement (50) aufgebracht wird, und wobei
das Kathodenelement (46) und das Verbundelement (50) gemeinsam zu plattenförmigen Stapelsegmenten (58) geschnitten werden, welche jeweils ein Verbundsegment (52) und ein Kathodensegment (56) umfassen, und anschließend die Stapelsegmente (58) gestapelt werden.

4. Verfahren nach einem der vorstehenden Ansprüche, wobei das anodische Aktivmaterial (41) beidseitig auf den anodischen Stromableiter (31) aufgebracht ist, und/oder wobei das kathodische Aktivmaterial (42) beidseitig auf den kathodischen Stromableiter (32) aufgebracht ist.

5. Verfahren nach einem der vorstehenden Ansprüche, wobei beidseitig auf das Anodenelement (45) je ein Separatorelement (16) aufgebracht wird.

6. Verfahren nach einem der vorstehenden Ansprüche, wobei das Separatorelement (16) mit einer Oxidschicht (60) beschichtet ist.

7. Verfahren nach einem der Ansprüche 1 bis 5, wobei eine Oxidschicht (60) das Separatorelement (16) darstellt.

8. Verfahren nach einem der Ansprüche 1 bis 7, wobei beim Erzeugen des bandförmigen Verbundelements (50) eine Oxidschicht (60) auf das Anodenelement (45) aufgebracht wird.

9. Verfahren nach einem der Ansprüche 1 bis 6 und 8, wobei beim Erzeugen des bandförmigen Verbundelements (50) eine Oxidschicht (60) zwischen das Anodenelement (45) und das Separatorelement (16) eingebracht wird.

10. Verfahren nach einem der Ansprüche 8 oder 9, wobei die Oxidschicht (60) in feuchtem Zustand auf das Anodenelement (45) aufgebracht wird.

11. Verfahren nach Anspruch 10, wobei
das Separatorelement (16) auf das Anodenelement (45) und auf die Oxidschicht (60) aufgebracht wird, bevor die Oxidschicht (60) getrocknet ist.

12. Batteriezelle (2), umfassend mindestens einen Elektrodenstapel (10) hergestellt nach einem Verfahren nach einem der vorstehenden Ansprüche.

13. Verwendung einer Batteriezelle (2) nach Anspruch 12 in einer Batteriezelle (2) in einem Elektrofahrzeug (EV), in einem Hybridfahrzeug (HEV), in einem Plug-In-Hybridfahrzeug (PHEV) oder in einem Consumer-Elektronik-Produkt.

## Claims

1. Process for producing an electrode stack (10) for a battery cell (2), comprising the following steps:
- provision of a strip-shaped anode element (45) comprising an anodic power outlet lead (31) onto which an anodic active material (41) has been applied,
- provision of a strip-shaped cathode element (46) comprising a cathodic power outlet lead (32) onto which a cathodic active material (42) has been applied,
- provision of a strip-shaped separator element (16),
- production of a strip-shaped composite element (50) by application of the separator element (16) onto the anode element (45),
- cutting of the composite element (50) to give plate-shaped composite segments (52) and cutting of the cathode element (46) to give plate-shaped cathode segments (56),
- stacking of segments (52, 56, 58) in such a way that composite segments (52) and cathode segments (56) are arranged alternately.

2. Process according to Claim 1, wherein the composite element (50) is firstly cut to give composite segments (52) and the cathode element (46) is cut to give cathode segments (56) and the composite segments (52) and the cathode segments (56) are subsequently stacked in an alternating manner.

3. Process according to Claim 1, wherein the cathode element (46) is firstly applied onto the composite element (50) and wherein
the cathode element (46) and the composite element (50) are together cut to give plate-shaped stack segments (58) which each comprise a composite segment (52) and a cathode segment (56) and the stack segments (58) are subsequently stacked.

4. Process according to any of the preceding claims, wherein the anodic active material (41) has been applied onto both sides of the anodic power outlet lead (31) and/or wherein the cathodic active material (42) has been applied onto both sides of the cathodic power outlet lead (32).

5. Process according to any of the preceding claims, wherein a separator element (16) is applied onto each side of the anode element (45).

6. Process according to any of the preceding claims, wherein the separator element (16) has been coated with an oxide layer (60).

7. Process according to any of Claims 1 to 5, wherein an oxide layer (60) represents the separator element (16) .

8. Process according to any of Claims 1 to 7, wherein an oxide layer (60) is applied onto the anode element (45) in the production of the strip-shaped composite element (50).

9. Process according to any of Claims 1 to 6 and 8, wherein an oxide layer (60) is introduced between the anode element (45) and the separator element (16) in the production of the strip-shaped composite element (50).

10. Process according to either Claim 8 or 9, wherein the oxide layer (60) is applied in the moist state onto the anode element (45).

11. Process according to Claim 10, wherein the separator element (16) is applied onto the anode element (45) and onto the oxide layer (60) before the oxide layer (60) has been dried.

12. Battery cell (2) comprising at least one electrode stack (10) produced by a process according to any of the preceding claims.

13. Use of a battery cell (2) according to Claim 12 in a battery cell (2) in an electric vehicle (EV), in a hybrid vehicle (HEV), in a plug-in hybrid vehicle (PHEV) or in a consumer electronics product.

## Revendications

1. Procédé de production d'un empilement d'électrodes (10) destiné à un élément de batterie (2), le procédé comprenant les étapes suivantes :
- fournir un élément anodique (45) en forme de bande comprenant un collecteur de courant anodique (31) sur lequel un matériau actif anodique (41) est appliqué,
- fournir un élément cathodique (46) en forme de bande comprenant un collecteur de courant cathodique (32) sur lequel un matériau actif cathodique (42) est appliqué,
- fournir un élément de séparation (16) en forme de bande,
- produire un élément composite (50) en forme de bande par application de l'élément de séparation (16) sur l'élément anodique (45),
- découper l'élément composite (50) en segments composites (52) en forme de plaque, et découper l'élément cathodique (46) en segments cathodiques (56) en forme de plaque,
- empiler des segments (52, 56, 58) de façon à disposer les segments composites (52) et les segments cathodiques (56) en alternance.

2. Procédé selon la revendication 1,
l'élément composite (50) étant d'abord découpé en segments composites (52) et l'élément cathodique (46) en segments cathodiques (56), puis les segments composites (52) et les segments cathodiques (56) sont empilés en alternance.

3. Procédé selon la revendication 1,
l'élément cathodique (46) est appliqué sur l'élément composite (50), et
l'élément cathodique (46) et l'élément composite (50) étant découpés conjointement pour former des segments d'empilement (58) en forme de plaque qui comprennent chacun un segment composite (52) et un segment cathodique (56), puis les segments d'empilement (58) étant empilés.

4. Procédé selon l'une des revendications précédentes,
le matériau actif anodique (41) étant appliqué sur les deux côtés du collecteur de courant anodique (31), et/ou
le matériau actif cathodique (42) étant appliqué sur les deux côtés du collecteur de courant cathodique (32) .

5. Procédé selon l'une des revendications précédentes,
un élément de séparation (16) étant appliqué sur les deux côtés de l'élément anodique (45).

6. Procédé selon l'une des revendications précédentes,
l'élément de séparation (16) étant revêtu d'une couche d'oxyde (60).

7. Procédé selon l'une des revendications 1 à 5,
une couche d'oxyde (60) représentant l'élément de séparation (16).

8. Procédé selon l'une des revendications 1 à 7,
une couche d'oxyde (60) étant appliquée sur l'élément anodique (45) lors de la production de l'élément composite (50) en forme de bande.

9. Procédé selon l'une des revendications 1 à 6 et 8, une couche d'oxyde (60) étant introduite entre l'élément anodique (45) et l'élément de séparation (16) lors de la production de l'élément composite (50) en forme de bande.

10. Procédé selon l'une des revendications 8 ou 9,
la couche d'oxyde (60) étant appliquée à l'état humide sur l'élément anodique (45).

11. Procédé selon la revendication 10,
l'élément de séparation (16) étant appliqué sur l'élément anodique (45) et sur la couche d'oxyde (60) avant que la couche d'oxyde (60) n'ait séché.

12. Élément de batterie (2) comprenant au moins un empilement d'électrodes (10) réalisé par un procédé selon l'une des revendications précédentes.

13. Utilisation d'un élément de batterie (2) selon la revendication 12 dans un élément de batterie (2) d'un véhicule électrique (EV), dans un véhicule hybride (HEV), dans un véhicule hybride rechargeable (PHEV) ou dans un produit électronique grand public.
